# EUROPÄISCHE PATENTSCHRIFT

(11) **EP 2 165 474 B1**
(45) Veröffentlichungstag und Bekanntmachung des Hinweises auf die Patenterteilung: **08.12.2021**
(21) Anmeldenummer: 08784623.4
(22) Anmeldetag: 04.07.2008
(51) Int. Cl.: H04L 12/40, H04L 12/931, H04L 12/773, H04L 12/939

(54) **SCHNELLE RINGREDUNDANZ EINES NETZWERKES**
FAST RING REDUNDANCY OF A NETWORK
REDONDANCE CYCLIQUE RAPIDE D'UN RÉSEAU

(30) Priorität: 05.07.2007 DE 102007031443
(43) Veröffentlichungstag der Anmeldung: 24.03.2010
(73) Patentinhaber: Hirschmann Automation and Control GmbH, 72654 Neckartenzlingen (DE)
(72) Erfinder: MAISCH, Werner, 72639 Neuffen (DE); MOHL, Dirk, 73733 Esslingen (DE); SCHMID, Wolfgang, 73230 Kirchheim unter Teck (DE); STIEGLER, Andreas, 72138 Kirchentellinsfurt (DE)
(74) Vertreter: Greif, Thomas
(86) Internationale Anmeldenummer: PCT/EP2008/005485
(87) Internationale Veröffentlichungsnummer: WO 2009/003715

(56) Entgegenhaltungen:
- US-A1- 2006 215 546
- US-A1- 2008 095 063
- US-B1- 6 724 757
- None

## Beschreibung

Die Erfindung betrifft ein Netzwerk und ein Verfahren zum Betreiben eines Netzwerkes gemäß dem jeweiligen Oberbegriff der unabhängigen Patentansprüche.
D.h. es handelt sich insbesondere um eine Erfindung für Ethernet-Switche in Netzwerken. Insbesondere betrifft die Erfindung Switche in Netzwerken in besonderen Umgebungsbedienungen. Auf den Einsatz bei Switchen muss die Erfindung jedoch nicht beschränkt sein, allerdings ist sie hier vorzugsweise anwendbar. Daher wird im folgenden auf den Einsatz der Erfindung bei Switchen eingegangen, obwohl sie allgemein bei den vorstehend genannten elektronischen Geräten einsetzbar ist, die mit mindestens zwei Netzwerkzugängen an ein Netzwerk angeschlossen sind.

Ist-Zustand (Stand der Technik):
Wird ein Netzwerk mit Switchen aufgebaut, ist es eine häufige Forderung, dass im Falle einer Leitungsunterbrechung auf redundante bis zu diesem Zeitpunkt inaktive Verbindungen automatisch umgeschaltet wird. Auf diese Weise wird die Unterbrechung der Datenübermittlung auf ein Minimum reduziert.

Zu diesem Zweck beschreibt der internationale Standard IEEE802.1D das Spanning Tree Protokoll und in der neueren Ausgabe die schnellere Variante, das Rapid Spanning Tree Protokoll (RSTP). Es geht hier darum, dass ein Netzwerk mit Switchen beliebig vermascht werden kann. Für Ethernet gilt die Regel, dass zwischen zwei Teilnehmern immer nur eine aktive Verbindung existieren darf. Das Protokoll löst mit seinem Algorithmus das Netzwerk zu einer Baumstruktur auf und inaktiviert alle doppelten Verbindungen. Diese werden dann bei Bedarf, also Ausfall der ursprünglichen Verbindung aktiviert. Das Protokoll RSTP ermöglicht eine zuverlässige Umschaltung, hat aber Beschränkungen bezüglich Netzwerkdurchmesser und verlässlicher Umschaltgeschwindigkeit auf eine redundante Verbindung. Das bedeutet, es kann nicht immer sichergestellt werden, dass die Umschaltung sehr schnell bzw. in einer genau festgelegten Zeit stattfinden kann. Das Protokoll ist bezüglich der Umschaltzeit somit nicht deterministisch. Weiterhin ist für den Einsatz des Protokolls ungünstig, dass die Topologie beliebig sein kann und so die Übersichtlichkeit und die Vorhersagbarkeit nicht immer einfach abzuleiten ist.

Aus diesem Grunde wurde in Patent WO 99/46908 ein Verfahren zur Ringredundanz spezifiziert. Dieses Verfahren zeichnet sich durch eine einfache Topologie in Form eines Rings und einer deterministischen Umschaltzeit von maximal 500 ms (Millisekunden) aus. Dieses Verfahren hat sich in der Automatisierungstechnik durchgesetzt und wird aktuell in der IEC-Arbeitsgruppe IEC 62439 standardisiert. Dabei ist eine Umschaltzeit von bis zu maximal 200ms möglich.

Die US 6,724,757 B1 offenbart dazu einen Router mit mehreren Prozessoren, welche unterschiedliche Aufgaben im Router übernehmen. Der Router kann für verzweigte Netzwerke eingesetzt werden, wobei einer der Prozessoren einen Switch im Router steuern kann.

Die US 2006/0215546 A1 offenbart ein Datenrelais, welches in Netzwerken mit Ring-Topologie eingesetzt werden kann. Zu dem Datenrelais wird ein Prozessor offenbart, welcher mit einer Steuereinheit kommunizieren kann.

Problem:
Die Anforderung an die Netzwerke in der Automatisierung sind weiter gestiegen. Eine garantierte maximale Ausfallzeit von 500 oder 200 ms genügt in vielen Anwendungen nicht mehr. Als aktuelles Beispiel ist hier der Bereich Safety / Arbeitssicherheit genannt. Anlagen in diesem Bereich werden mehr und mehr basierend auf der Kommunikation über Ethernet aufgebaut. Dabei wird das Netzwerk von diesen Anwendungen für das Sicherheitsprotokoll als transparent angesehen. Ein Netzausfall wird jedoch von der sicherheitskritischen Anwendung erkannt und führt sofort zum Stopp der Anlage. Die Anforderung ist, den Netzausfall so kurz zu gestatten, dass er für die sicherheitskritische Anwendung nicht als relevant angesehen werden muss. Aufgrund aktueller Anwendungen hat sich die Forderung ergeben, dass dieser Ausfall garantiert kleiner als 20ms sein muss.

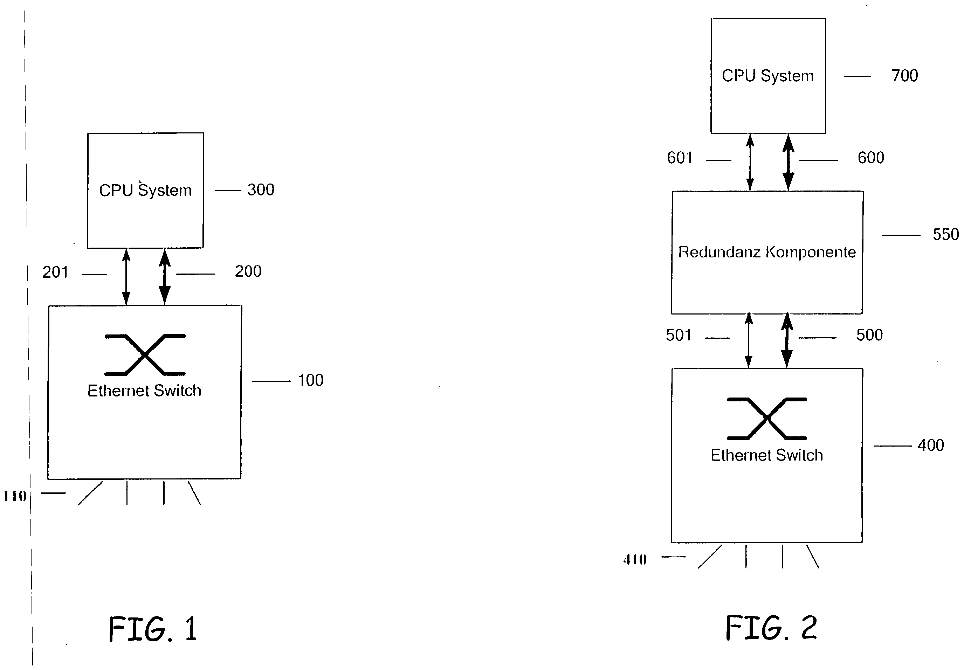

Diese Forderung kann mit herkömmlichen, bekannten Systemen nicht mehr realisiert werden. Die bisher bestehenden Lösungen setzen sich zusammen aus einem CPU-System, auf dem neben vielen anderen zeitintensiven Funktionen das Protokoll ausgeführt wird und einem Switching Chip, über den die Vermittlung läuft und welcher ebenfalls über das CPU-System gesteuert wird (siehe hierzu das bekannte System in Figur 1).

Bisher gibt es für die Problemstellung, eine möglichst kurze wie auch garantierte Umschaltzeit zu erreichen, folgende technischen Ansätze.
1. Das CPU System wird entsprechend optimiert, damit zur Abarbeitung des Redundanzprotokolls maximale Systemressourcen zur Verfügung stehen. Damit läßt sich die Reaktionszeit aber nur sehr eingeschränkt aufgrund fest vorgegebener Kapazitäten verringern.
2. Die vollständige Redundanzfunktion wird in den Switchingchip integriert. Aktuell sind hierfür aber keine verwertbaren Lösungen verfügbar. Es gibt keine handelsüblichen Switchingchips, die die entsprechenden Funktionen zur Verfügung stellen. Des weiteren ist eine Optimierung des CPU-Systems ausschließlich zugunsten der Redundanzfunktion nicht sinnvoll, da das System bei entsprechender Leistungssteigerung des Systems die Kosten für das System nicht mehr marktgerecht sind.

Lösung:
Die Lösung ist ein System, das optimiert ist für die schnelle Abwicklung des Redundanzprotokolls. Die Grundfunktion des Redundanzprotokolls soll sich dabei an die im Patent WO99/46908 genannten Funktionalität orientieren.

Erfindungsgemäß ist vorgesehen, dass zwischen der Steuereinheit und dem zumindest einen Switch eine Redundanzeinheit geschaltet ist. Der Vorteil ist darin zu sehen, dass sowohl die Steuereinheit als auch der Switch ihren eigentlichen Aufgaben nachgehen können und von Aufgaben, die die Redundanz des Netzwerkes im Falle eines Ausfalles betreffen, losgelöst sind. Dadurch lässt sich in besonders vorteilhafter Weise die Reaktionszeit im Falle eines Ausfalles deutlich verkürzen und damit die Reaktionszeit auf einen solchen Ausfall beschleunigen.

Die Idee ist ein Aufbau, der im Prinzip identisch mit bisherigen Systemen ist und auf Standardkomponenten aufsetzt. Dieser wir aber an einer ganz bestimmten Stelle durch einen speziellen Baustein für die Beschleunigung des Redundanzprotokolls ergänzt.

Die Besonderheit der Lösung dabei ist, dass dieser Baustein in die beiden Verbindungen zwischen CPU- System und Switch eingebaut wird. Über diese Verbindung gehen zum einen die Ethernet Daten zum anderen die Konfigurations- und Diagnosedaten des Switch Bausteins. Üblicherweise werden die Ethernet Daten über eine MII, RMII, SMII, GMII oder SGMII oder ein herstellerspezifisches Interface übertragen. Die KonfigurationsKommunikation mit dem Chip erfolgt über ein paralleles oder serielles Interface z. B. SPI oder MDIO.

In Weiterbildung der Erfindung weist die Redundanzeinheit eine Eingabeeinheit und eine Speichereinheit auf. Dies hat den Vorteil, dass Daten und Programme (Software) für die Redundanzaufgaben des Netzwerkes unabhängig von der Steuereinheit beziehungsweise unabhängig von dem Switch in die Redundanzeinheit eingegeben werden können. Das bedeutet, dass Änderungen, die die Redundanzaufgabe des Netzwerkes betreffen, unabhängig von dem Betrieb der Steuereinheit beziehungsweise unabhängig von dem Betrieb des Switches oder anderer Komponenten des Netzwerkes durchgeführt werden können.

Alternativ oder ergänzend dazu ist in Weiterbildung der Erfindung vorgesehen, dass die Redundanzeinheit zumindest einen Steckplatz für ein Modul zwecks einer Funktionserweiterung aufweist. Damit ist es anstelle der Eingabeeinheit oder ergänzend dazu möglich, eine Funktionserweiterung vorzunehmen, um zum Beispiel den Funktionsumfang oder die Software der Redundanzeinheit ändern, vorzugsweise erweitern zu können.

In Weiterbildung der Erfindung ist die Steuereinheit über eine Ethernetschnittstelle und über eine Konfigurationsschnittstelle mit der Redundanzeinheit verbunden. Weiterhin ist alternativ oder ergänzend dazu vorgesehen, dass die Redundanzeinheit über eine Ethernetschnittstelle und über eine Konfigurationsschnittstelle mit dem Switch verbunden ist. Dies hat den Vorteil, dass über die eine Schnittstelle der Datenaustausch innerhalb des Netzwerkes und seiner beteiligten Netzwerkinfrastrukturgeräte stattfinden kann, wohingegen über die andere Schnittstelle Konfigurationsdaten ausgetauscht werden können.

In Weiterbildung der Erfindung ist vorgesehen, dass die Redundanzeinheit als ASIC oder als FPGA ausgebildet ist. Die Ausbildung als ASIC (Application Specific Integrated Circuit, anwendungsspezifische integrierte Schaltung) hat den Vorteil, dass abhängig von den Aufgaben des Netzwerkes und unter Berücksichtigung der Anforderungen des Betreibers des Netzwerkes die erforderlichen Daten, Parameter und dergleichen zum Betrieb der Redundanzeinheit in dieser anwendungsspezifischen integrierten Schaltung zusammengefasst werden können. Damit erhöht sich die Individualität der Redundanzeinheit, die den Anforderungen des Netzwerkes gerecht wird. Alternativ dazu ist vorgesehen, dass die Redundanzeinheit als FPGA (Field Programmable Gate Array) ausgebildet ist. Der FPGA beinhaltet programmierbare logische Komponenten und programmierbare Verbindungsleitungen mit steuerbaren Schaltern zwischen diesen Komponenten, wobei das gesamte System als Feld beziehungsweise Matrix gefertigt ist. Die Komponenten können grundlegende logische Funktionen abbilden und auch zu komplexerer Logik wie einem Decoder, Encoder oder mathematischen Funktionen zusammengefasst und verknüpft werden. Der Vorteil der FPGA ist darin zu sehen, dass er nach der Herstellung von dem Anwender programmiert wird, der diesen Baustein in seiner Schaltung einsetzt. Allerdings ist der Begriff Programmierung in diesem Kontext anders zu verstehen als bei der Erstellung von Software für einen Prozessor. In einem FPGA werden Schaltungsstrukturen mittels Hardwarebeschreibungssprachen oder in Form von Schaltplänen erstellt und nachfolgend diese Daten zwecks Konfiguration in den Baustein übertragen. Im FPGA werden dadurch bestimmte Schalterstellungen aktiviert beziehungsweise deaktiviert, was dann eine konkrete implementierte digitale Schaltung ergibt. Da die Funktion des FPGA's ausschließlich durch die Konfiguration festgelegt wird, kann der gleiche Baustein für viele verschiedene Schaltungen und Anwendungen verwendet werden. Der Vorteil ist daher, dass er in großen Stückzahlen produziert werden kann, was ihn beispielsweise bei Prototypen und vor allen Dingen bei kleinen Serien sehr kostengünstig im Vergleich zu dem ASIC macht.

Weiterhin ist gemäß der Erfindung ein Verfahren zum Betreiben eines Netzwerkes vorgesehen, wobei eine zwischen den Switch und der Steuereinheit geschaltete Redundanzeinheit den Datenstrom zwischen dem Switch und der Steuereinheit analysiert und in Abhängigkeit von dem Ergebnis der Analyse Daten in den Datenstrom eingefügt und/oder Daten aus dem Datenstrom entfernt werden.

In Weiterbildung der Erfindung ist vorgesehen, dass von der Redundanzeinheit eigenständig Testdaten, insbesondere Testdatenpakete, in einer vorgebbaren Datenrate gesendet und/oder empfangen werden.

In Weiterbildung der Erfindung ist vorgesehen, dass die Testdaten Netzwerkringdaten beziehungsweise Verbindungsdaten sind, mittels denen geprüft wird, ob der Netzwerkring funktioniert oder nicht und ob eine Verbindung zwischen zugehörigen Netzwerkinfrastrukturgeräten gegeben ist oder nicht. Dabei ist beispielsweise eine Topologie des Netzwerkes so aufgebaut, dass in einem Ringnetzwerk entsprechend ihrer Funktion Netzwerkinfrastrukturgeräte wie Switches, Hubs, Router, PC's Sensoren, Aktoren und dergleichen vorhanden sind.

Der Aufbau eines solchen Systems (Teil eines Netzwerkes) ist in Figur 2 dargestellt.

Die Redundanzeinheit kann z. B. in Form eines FPAGs realisiert werden, aber auch als ASIC ausgeführt werden. Die Besonderheit bei einer Realisierung als FPGA ist, dass die Funktionalität auch während des Betriebs ins FPGA gespielt werden kann und es somit auch möglich ist über ein Softwareupdate die Logikfunktion des FPGAs zu aktualisieren.

Ein Teil der Erfindung ist, dass die Redundanzeinheit eigenständig Ethernet-Pakete aus dem Datenstrom zwischen Switch-Chip und CPU analysieren und entfernen kann, genauso wie eigenständig Pakete in den Datenstrom einfügen kann. Des Weiteren kann die Redundanzeinheit eigenständig Konfigurations- und Diagnosedaten mit dem Switchkern austauschen.

Als Grundfunktionen zur Beschleunigung der Redundanz stellt die Redundanz-Komponente folgende Funktionsblöcke zur Verfügung:
- eigenständiges Senden und Empfangen von Test-Paketen in einer wählbaren Datenrate,
- eigenständige Kommunikation mit dem Switchchip und hierbei die Möglichkeit zum Auslösen folgender Funktionen: Löschen der Adresstabelle, betroffenen Port in Blocking zu schalten, betroffenen Port in Forwarding zu schalten,
- Steuerung Zugriffsrecht (CPU oder Redundanz- Komponente) auf Kommunikationsinterface zum Switchchip.

Des weiteren laufen wesentliche Funktionen des Redundanzprotokolls in der Redundanz-Komponente ab.

Mit den Testpaketen können zwei für die Redundanzüberwachung notwendige Zustände überprüft werden. Mit den Ring-Test-Paketen kann geprüft werden, ob der Ring funktioniert. Mit den Link-Test-Paketen kann geprüft werden, ob die Verbindung zwischen zwei Geräten funktioniert. Die Link-Test-Pakete sind dabei notwendig, da sich herausgestellt hat, dass die Methode, der vom Chip gemeldete Linkstatus zur Erkennung, ob zwischen zwei Ports eine Verbindung besteht oder nicht, nicht zuverlässig und vor allem nicht schnell genug erkannt wird.

Da die Testpakete von dem Redundanzeinheit generiert werden, können diese in einer so hohen Rate generiert werden, dass ein Linkausfall in einer hinreichend kurzen Zeit erkannt wird, genauso wie ein Linkaufbau.

Ein weiterer Vorteil dieser Lösung ist die direkte Kommunikation der Redundanzeinheit mit dem Switchchip ohne den Umweg über das CPU-System. So können notwendige Umschaltvorgänge, die sich aufgrund des Empfangs von Steuerpaketen ergeben, extrem schnell bewältigt werden.

Mit dieser Lösung ist es durch die Auftrennung von zeitunkritischen Funktionen, die in Software erledigt werden und zeitkritischen Funktionen, die in Hardware erledigt werden, möglich, die gewünschten Reaktionszeiten auf einen Fehler im Netzwerk auf unter 20ms zu beschleunigen.

Beschreibung Funktion Figur 1:
Figur 1 zeigt den typischen Ist-Zustand eines Ethernet-Switch-Systems mit Management-Funktionalität.

Dies besteht aus einem CPU System 300, das eine Ethernet-Schnittstelle 200 besitzt und direkt an den Ethernet-Switch 100 über einen Ethernet-Port verbunden ist. Der Ethernet-Switch vermittelt Ethernet-Datenpakete zwischen den externen Ethernetports 110 und dem CPU-System. Des Weiteren wird der Ethernet Switch 100 über eine Konfigurationsschnittstelle 201 mit dem CPU-System 300 verbunden, darüber werden Kontroll- und Statusinformationen übertragen.

Beschreibung Funktion Figur 2:
Figur 2 zeigt die Erweiterung eines Ethernet-Switch-Systems mit Management-Funktionalität. Die Erweiterung besteht aus einer Redundanz-Komponente (FPGA, ASIC oder eines Kommunikationsprozessors) 550, das zwischen dem CPU-System 700 und dem Ethernet-Switch 400 geschaltet wird. Der Ethernet-Datenfluß geht dabei über die Ethernet-Schnittstelle 600 und 500 zum Ethernet-Switch 400 weiter zu den externen Ethernetports 410. Die Kontroll- und Statusinformationen geht über die Konfigurationsschnittstelle 601 und 501. In der Redundanz-Komponente 550 wird über eine Steuerung dafür gesorgt, dass keine Zugriffskonflikte zwischen CPU und Redundanzfunktion bzw. Datenverluste auftreten.

Zusammengefasst zeichnet sich die Erfindung durch folgenden Aufbau bzw. durch die folgende Betriebsweise aus:
Ethernet-Netzwerkkomponente mit mindestens zwei Netzwerkanschlüssen, die sich dadurch auszeichnet, dass diese eine spezielle Redundanz-Komponente zwischen CPU-System und Switch, insbesondere Switch-Kern, besitzt, die das Redundanzprotokoll in Hardware abbildet.

Die Redundanz-Komponente ist in die Daten-Kommunikation zwischen CPU-System und Switch-Kern geschaltet und kann eigenständig Datenpakete ergänzen und herausfiltern.

Die Redundanz-Komponente ist in die Konfigurationskommunikation zwischen CPU-System und Switch-Kern geschaltet und kann eigenständig Konfigurationskommandos an den Switch-Kern absenden und notwendige Konfigurationsdaten auslesen.

Die Daten-Kommunikation zwischen CPU-System und Switchkern ist mittels Verkehrslimitierung so eingestellt, dass immer ausreichend Bandbreite für die Redundanz-Komponente verfügbar ist, um eigenständig Datenpakete einzuspeisen.

Für die Konfigurations- Kommunikation zwischen CPU-System und Switch-System wird ein spezieller Handshake verwendet, der sicherstellt, dass die Redundanz-Komponente die notwendige Priorität gegenüber CPU-Zugriffe erhält.

Die Redundanzkomponente zeichnet sich darüber hinaus dadurch aus, dass sie es ermöglicht, zusätzliche Funktionen für das System nachzurüsten, die die eigentliche Switchhardware nicht zur Verfügung stellt.

Die Redundanzkomponente zeichnet sich dadurch aus, dass sie für eine beliebige Datenratelimitierung in Richtung CPU-System nachgerüstet werden kann.

Die Redundanzkomponente zeichnet sich dadurch aus, dass bestimmte Pakete weitergeleitet werden können, ohne dabei das CPU-System zu belasten.

## Patentansprüche

1. Netzwerk, das zumindest einen Switch (400) mit einer Schnittstelle (410) zu Netzwerkinfrastrukturgeräten des Netzwerkes, wie Switches, Hubs, Router, PC-Sensoren, Aktoren, aufweist, wobei dem zumindest einen Switch (400) eine Steuereinheit (700) zugeordnet ist, die mit dem Switch (400) zum Datenaustausch verbunden ist, wobei zwischen der Steuereinheit (700) und dem Switch (400) eine Redundanzeinheit (550) geschaltet ist, **dadurch gekennzeichnet, dass** die Redundanzeinheit (550) ein Redundanzprotokoll in Hardware abbildet, dass der zumindest eine Switch (400) von der Steuereinheit (700) gesteuert wird, dass die Redundanzeinheit (550) mit dem Switch (400) kommunizieren kann, wobei von der Redundanzeinheit (550) eigenständig Testdaten in einer vorgebbaren Datenrate gesendet und/oder empfangen werden, und wobei die Redundanzeinheit (550) eigenständig mit dem Switch (400) kommuniziert und dazu ausgebildet ist, Testdaten in einer wählbaren Datenrate eigenständig zu senden und zu empfangen, durch eigenständige Kommunikation mit einem Switchchip eine Adresstabelle zu löschen, einen betroffenen Port in blocking zu schalten oder einen betroffen Port in forwarding zu schalten.

2. Netzwerk nach Anspruch 1, **dadurch gekennzeichnet, dass** die Redundanzeinheit (550) eine Eingabeeinheit und eine Speichereinheit aufweist.

3. Netzwerk nach Anspruch 1 oder 2, **dadurch gekennzeichnet, dass** die Redundanzeinheit (550) zumindest einen Steckplatz für ein Modul zwecks einer Funktionserweiterung der Redundanzeinheit (550) aufweist.

4. Netzwerk nach einem der Ansprüche 1 bis 3, **dadurch gekennzeichnet, dass** die Steuereinheit (700) über eine Ethernetschnittstelle (600) und eine Konfigurationsschnittstelle (601) mit der Redundanzeinheit (550) verbunden ist.

5. Netzwerk nach einem der vorhergehenden Ansprüche 1 bis 4, **dadurch gekennzeichnet, dass** die Redundanzeinheit (550) über eine Ethernetschnittstelle (500) und über eine Konfigurationsschnittstelle (501) mit dem Switch (400) verbunden ist.

6. Netzwerk nach einem der vorhergehenden Ansprüche, **dadurch gekennzeichnet, dass** die Redundanzeinheit (550) als Application Specific Integrated Circuit, ASIC, oder als Field Programmable Gate Array, FPGA, ausgebildet ist.

7. Netzwerk nach einem der vorhergehenden Ansprüche, **dadurch gekennzeichnet, dass** als Testdaten Testdatenpakete verwendet werden.

8. Verfahren zum Betreiben eines Netzwerkes, das zumindest einen Switch (400) sowie daran angeschlossene Netzwerkinfrastrukturgeräte wie Switches, Hubs, Router, PC-Sensoren, Aktoren, aufweist, wobei der zumindest eine Switch (400) von einer Steuereinheit (700) gesteuert wird, wobei eine zwischen den Switch (400) und der Steuereinheit (700) geschaltete Redundanzeinheit (550) den Datenstrom zwischen dem Switch (400) und der Steuereinheit (700) analysiert und in Abhängigkeit von dem Ergebnis der Analyse Daten in den Datenstrom eingefügt und/oder Daten aus dem Datenstrom entfernt werden, **dadurch gekennzeichnet, dass** die Redundanzeinheit (550) ein Redundanzprotokoll in Hardware abbildet und von der Redundanzeinheit (550) eigenständig Testdaten in einer vorgebbaren Datenrate gesendet und/oder empfangen werden, und wobei die Redundanzeinheit (550) eigenständig mit dem Switch (400) kommuniziert und Testdaten in einer wählbaren Datenrate eigenständig sendet und empfängt, durch eigenständige Kommunikation mit einem Switchchip eine Adresstabelle löschen kann, einen betroffenen Port in blocking schalten oder einen betroffen Port in forwarding schalten kann.

9. Verfahren nach Anspruch 8, **dadurch gekennzeichnet, dass** das Netzwerk eine Netzwerkring-Topologie aufweist und die Testdaten Netzwerkringdaten beziehungsweise Verbindungsdaten sind, mittels denen geprüft wird, ob der Netzwerkring funktioniert oder nicht und ob eine Verbindung zwischen zugehörigen Netzwerkinfrastrukturgeräten, wie Switches, Hubs, Router, PC-Sensoren, Aktoren, gegeben ist oder nicht.

10. Verfahren nach Anspruch 8 oder 9, **dadurch gekennzeichnet, dass** als Testdaten Testdatenpakete verwendet werden.

## Claims

1. Network, which has at least one switch (400) comprising an interface (410) to network infrastructure devices of the network, such as switches, hubs, routers, PC sensors and actuators, wherein the at least one switch (400) is assigned a control unit (700) that is connected to the switch (400) for exchanging data, wherein a redundancy unit (550) is connected between the control unit (700) and the switch (400), **characterized in that** the redundancy unit (550) reproduces a redundancy protocol in hardware, **in that** the at least one switch (400) is controlled by the control unit (700), **in that** the redundancy unit (550) can communicate with the switch (400), wherein test data are transmitted and/or received autonomously by the redundancy unit (550) at a predeterminable data rate, and wherein the redundancy unit (550) communicates autonomously with the switch (400) and is designed to transmit and to receive test data autonomously at a selectable data rate, to delete an address table by way of autonomous communication with a switch chip, and to switch an involved port to blocking mode or to switch an involved port to forwarding mode.

2. Network according to Claim 1, **characterized in that** the redundancy unit (550) has an input unit and a storage unit.

3. Network according to Claim 1 or 2, **characterized in that** the redundancy unit (550) has at least one slot for a module for the purpose of extending the functionality of the redundancy unit (550).

4. Network according to one of Claims 1 to 3, **characterized in that** the control unit (700) is connected to the redundancy unit (550) via an Ethernet interface (600) and a configuration interface (601).

5. Network according to one of the preceding Claims 1 to 4, **characterized in that** the redundancy unit (550) is connected to the switch (400) via an Ethernet interface (500) and via a configuration interface (501).

6. Network according to one of the preceding claims, **characterized in that** the redundancy unit (550) is in the form of an application-specific integrated circuit, ASIC, or a field-programmable gate array, FPGA.

7. Network according to one of the preceding claims, **characterized in that** test data packets are used as test data.

8. Method for operating a network, which has at least one switch (400) and network infrastructure devices, such as switches, hubs, routers, PC sensors and actuators, connected thereto, wherein the at least one switch (400) is controlled by a control unit (700), wherein a redundancy unit (550) connected between the switch (400) and the control unit (700) analyses the data stream between the switch (400) and the control unit (700) and, depending on the result of the analysis, data are inserted into the data stream and/or data are removed from the data stream, **characterized in that** the redundancy unit (550) reproduces a redundancy protocol in hardware and test data are transmitted and/or received autonomously by the redundancy unit (550) at a predeterminable data rate, and wherein the redundancy unit (550) communicates autonomously with the switch (400) and transmits and receives test data autonomously at a selectable data rate, can delete an address table by way of autonomous communication with a switch chip, and can switch an involved port to blocking mode or switch an involved port to forwarding mode.

9. Method according to Claim 8, **characterized in that** the network has a network ring topology and the test data are network ring data or connection data, by means of which a check is performed to determine whether or not the network ring is working and whether or not there is a connection between associated network infrastructure devices, such as switches, hubs, routers, PC sensors and actuators.

10. Method according to Claim 8 or 9, **characterized in that** test data packets are used as test data.

## Revendications

1. Réseau, qui possède au moins un commutateur (400) pourvu d'une interface (410) vers des appareils d'infrastructure de réseau du réseau, tels que des commutateurs, des concentrateurs, des routeurs, des capteurs de PC, des actionneurs, une unité de commande (700) étant associée à l'au moins un commutateur (400), laquelle est reliée au commutateur (400) pour l'échange de données, une unité de redondance (550) étant connectée entre l'unité de commande (700) et le commutateur (400), **caractérisé en ce que** l'unité de redondance (550) représente un protocole de redondance dans le matériel, **en ce que** l'au moins un commutateur (400) est commandé par l'unité de commande (700), **en ce que** l'unité de redondance (550) peut communiquer avec le commutateur (400), des données de test étant émises et/ou reçues de manière autonome par l'unité de redondance (550) à un débit de données pouvant être prédéfini, et l'unité de redondance (550) communiquant de manière autonome avec le commutateur (400) et étant configurée pour émettre et recevoir les données de test de manière autonome dans un débit de données sélectionnable, effacer une table d'adresses par une communication autonome avec une puce de commutateur, commuter un port concerné en blocage ou commuter un port concerné en retransmission.

2. Réseau selon la revendication 1, **caractérisé en ce que** l'unité de redondance (550) possède une unité d'entrée et une unité de mémoire.

3. Réseau selon la revendication 1 ou 2, **caractérisé en ce que** l'unité de redondance (550) possède au moins un emplacement d'enfichage pour un module en vue d'une extension de fonction de l'unité de redondance (550).

4. Réseau selon l'une des revendications 1 à 3, **caractérisé en ce que** l'unité de commande (700) est reliée à l'unité de redondance (550) par le biais d'une interface Ethernet (600) et d'une interface de configuration (601).

5. Réseau selon l'une des revendications précédentes 1 à 4, **caractérisé en ce que** l'unité de redondance (550) est reliée au commutateur (400) par le biais d'une interface Ethernet (500) et par le biais d'une interface de configuration (501).

6. Réseau selon l'une des revendications précédentes, **caractérisé en ce que** l'unité de redondance (550) est réalisée sous la forme d'un circuit intégré spécifique à l'application, ASIC, ou d'un réseau logique programmable sur site, FPGA.

7. Réseau selon l'une des revendications précédentes, **caractérisé en ce que** des paquets de test sont utilisés en tant que données de test.

8. Procédé pour faire fonctionner un réseau, qui possède au moins un commutateur (400) ainsi que des appareils d'infrastructure de réseau raccordés à celui-ci, tels que des commutateurs, des concentrateurs, des routeurs, des capteurs de PC, des actionneurs, l'au moins un commutateur (400) étant commandé par une unité de commande (700), une unité de redondance (550) connectée entre le commutateur (400) et l'unité de commande (700) analysant le flux de données entre le commutateur (400) et l'unité de commande (700) et, en fonction du résultat de l'analyse, des données étant insérées dans le flux de données et/ou des données étant retirées du flux, **caractérisé en ce que** l'unité de redondance (550) représente un protocole de redondance dans le matériel et des données de test sont émises et/ou reçues de manière autonome par l'unité de redondance (550) à un débit de données pouvant être prédéfini, et l'unité de redondance (550) communiquant de manière autonome avec le commutateur (400) et émettant et recevant les données de test de manière autonome dans un débit de données sélectionnable, pouvant effacer une table d'adresses par une communication autonome avec une puce de commutateur, pouvant commuter un port concerné en blocage ou commuter un port concerné en retransmission.

9. Procédé selon la revendication 8, **caractérisé en ce que** le réseau présente une topologie d'anneau de réseau et les données de test sont des données d'anneau de réseau ou des données de liaison au moyen desquels il est vérifié si l'anneau de réseau fonctionne ou non et si une liaison est établie entre les appareils d'infrastructure de réseau associés, tels que des commutateurs, des concentrateurs, des routeurs, des capteurs de PC, des actionneurs.

10. Procédé selon la revendication 8 ou 9, **caractérisé en ce que** des paquets de données de test sont utilisés en tant que données de test.
